# EUROPÄISCHE PATENTSCHRIFT

(11) **EP 0 552 324 B1**
(45) Veröffentlichungstag und Bekanntmachung des Hinweises auf die Patenterteilung: **10.05.1995**
(21) Anmeldenummer: 92910549.2
(22) Anmeldetag: 03.06.1992
(51) Int. Cl.: B01D 46/52, B01D 46/24, B01D 46/26

(54) **LUFTFILTEREINRICHTUNG**
AIR FILTER DEVICE
SYSTEME DE FILTRAGE DE L'AIR

(30) Priorität: 05.06.1991 CH 1673/91
(43) Veröffentlichungstag der Anmeldung: 28.07.1993
(73) Patentinhaber: GALIPAG, CH-8500 Frauenfeld (CH)
(72) Erfinder: GASSER, Hermann, CH-8500 Frauenfeld (CH)
(74) Vertreter: Patentanwälte Schaad, Balass, Menzl & Partner AG
(86) Internationale Anmeldenummer: CH9200106
(87) Internationale Veröffentlichungsnummer: WO9221428

(56) Entgegenhaltungen:
- EP-A- 0 117 065
- EP-A- 0 378 100
- FR-A- 2 353 328
- GB-A- 2 181 669
- US-A- 2 474 478
- US-A- 2 732 912
- US-A- 3 606 735
- US-A- 3 754 378
- US-A- 3 936 902

## Beschreibung

Die Erfindung betrifft eine Luftfiltereinrichtung gemäss dem Oberbegriff von Anspruch 1.

Faltenfilter, die zur Abscheidung von festen Luftverunreinigungen eingesetzt werden, müssen periodisch vom anhaftenden Filterrückstand gereinigt werden. Die Reinigung erfolgt entweder durch Rückspülung mit etwa dem Filterbetrieb entsprechenden Druck oder durch Absaugen. Die bisher hierfür angewendeten Methoden und eingesetzten Vorrichtungen vermögen in technischer Hinsicht nicht zu befriedigen.

Ziel der vorliegenden Erfindung ist es deshalb, eine Luftfiltereinrichtung vorzuschlagen, die nicht nur gute Filterwirkung zeigt, sondern auch die Nachteile der bekannten Reinigungseinrichtungen vermeidet.

Dieses Ziel wird gemäss der Erfindung durch die Merkmale des kennzeichnenden Teils von Anspruch 1 erreicht. Bevorzugte Ausführungsformen der Erfindung bilden den Gegenstand der abhängigen Ansprüche 2 bis 15. Ein Verfahren zum Betrieb der Luftfiltereinrichtung wird in den Ansprüchen 16 bis 18 beansprucht.

Die erfindungsgemässe Ausbildung der Luftfiltereinrichtung ermöglicht eine individuelle Ausgestaltung des Reinigungsvorganges. Beispielsweise kann die Reinigung nach einer ersten relativ kurzen Betriebszeit nur rohluftseitig mit der Transportströmung und erst nach einer weiteren längeren Betriebszeit gleichzeitig mit der Transportströmung und reinluftseitig durch Beaufschlagung mit Luft aus der Kammdüse erfolgen.

Weiterhin erlaubt die erfindungsgemässe Luftfiltereinrichtung während des Filterbetriebes die Ueberführung eines einzigen Filterbereiches, d.h. nur eines kleinen Teils der Luftfiltereinrichtung aus dem Filterzustand in den Reinigungszustand und umgekehrt. Dadurch kann eine individuelle Reinigung jedes Filterbereiches erfolgen. Mit anderen Worten, innerhalb einer Filtereinrichtung mit einer Anzahl von Filterbereichen kann ein einziger Filterbereich gereinigt werden, währenddem mit den übrigen Filterbereichen der Filterbetrieb ungestört fortgesetzt wird.

In der wirtschaftlichsten und daher einfachsten Ausführungsform weist die erfindungsgemässe Luftfiltereinrichtung nur Mittel zur Erzeugung einer Transportströmung auf, die im wesentlichen parallel zu den Faltenfiltern zwischen Filterbereich und Abgrenzungsorgan verläuft.

Eine aufwendigere, jedoch wirksamere Reinigung wird erzielt, wenn reinluftseitig eine oder mehrere entlang des Filterbereiches verfahrbare Düse vorgesehen sind. Vorteilhaft bilden die Düsenstrahlen mit den Lamellen des Filters einen spitzen Winkel, der während der Bewegung der Düse geändert wird. Um die Reinigungswirkung weiter zu verbessern, können die Faltenfilter mit einem pulsierenden Luftstrom beaufschlagt werden.

Die Düsen sind vorzugsweise als Lavaldüsen ausgebildet. Um eine Abkühlung der ausströmenden Luft und damit Kondensation der Luftfeuchtigkeit zu vermeiden, weist die Düse zweckmässigerweise eine Heizeinrichtung auf.

Eine weitere Optimierung kann durch Dampfzuführung, d.h. Anordnung einer Dampfzuleitung zu der Düse erzielt werden.

Die Austrittsöffnungen der einzelnen Luftdüsen der Kammdüsen sind wie die Zähne eines Kammes in einer Reihe angeordnet. Die von ihnen gebildete Linie, d.h. die Ebene der Düsenstrahlen bildet mit den Falten des Faltenfilters vorzugsweise einen spitzen Winkel. Als Folge dieser Anordnung werden die Falten des Faltenfilters beim Anblasen im Reinigungsbetrieb aufgeweitet und in Bewegung versetzt, wodurch die Reinigungswirkung beschleunigt bzw. verbessert wird. Die Düsen der Kammdüse können durch Ausnehmungen in einem Dichtungsmaterial gebildet sein. Dadurch ist ihre Herstellung, die z.B. durch Stanzen des Dichtungsmaterials erfolgen kann, wesentlich einfacher und wirtschaftlicher und die Düsenabmessungen können allein durch Wahl der Dicke des Dichtungsmaterials, z.B. eines Dichtungsbandes eingestellt werden.

Rohluftseitig kann den einzelnen Filterbereichen ein Abscheidungsorgan für gröbere Verunreinigungen, z.B. im Nichtbetriebszustand ungespanntes Filtertuch oder ein Sieb, vorgeordnet sein. Dieses spannt sich im Betriebszustand, d.h. im Filterbetrieb und hält grobe Feststoffe, Öltröpfchen oder Fasern und Flug der Textil-Industrie etc. zurück. Dadurch wird die Menge des Rückstandes auf dem Faltenfilter vermindert und die Perioden zwischen den Reinigungen werden verlängert.

Den Filtereinheiten können auch elektrostatische Abscheidehilfen bekannter Art zugeordnet sein, wodurch eine weitere Verbesserung des Abscheidungsgrades erzielt wird.

Bei einer bevorzugten Ausführungsform ist der einzelne Filterbereich von einem in V-Form angeordneten Faltenfilterpaar gebildet, an dessen Reinluftseite eine in Längsrichtung verfahrbare, über die Filterbreite Luftdüsen aufweisende V-förmige Kammdüse angeordnet ist. Dabei ist dem Filterbereich rohluftseitig ein Abgrenzungsorgan mit einem aus einer Offenstellung in eine Schliessstellung bewegbaren Absperrorgan, z.B. Klappe zugeordnet.

Mehrere Filterbereiche können zu einer linearen oder konzentrischen, z.B. kreisförmigen oder mehreckigen Luftfiltereinrichtung zusammengeschlossen werden, wobei bei konzentrischen Gebilden ein zentraler Ventilator eingesetzt werden kann.

Pro Filterbereich kann entweder eine Reinigungseinrichtung vorhanden sein oder es kann eine kleinere Anzahl Reinigungseinrichtungen als Filterbereiche vorhanden sein. Im zweiten Fall können entweder die Filterbereiche und/oder die Reinigungseinrichtung verfahrbar angeordnet sein.

Bei der erfindungsgemässen Luftfiltereinrichtung können die einzelnen Filterbereiche ohne Betriebsunterbruch gereinigt werden, da der Filterbetrieb mit den anderen Filterbereichen ohne wesentliche Verminderung der Filterkapazität aufrecht erhalten werden kann.

Die Erfindung wird anhand der Figuren weiter erläutert. Es zeigen rein schematisch:
- Fig. 1: eine erfindungsgemässe Luftfiltereinrichtung;
- Fig. 2: ein Filterbereich einer weiteren erfindungsgemässen Luftfiltereinrichtung;
- Fig. 3: einen Filterbereich einer weiteren erfindungsgemässen Luftfiltereinrichtung;
- Fig. 4: eine perspektivische Ansicht eines Filterbereiches einer weiteren erfindungsgemässen Luftfiltereinrichtung;
- Fig. 5: eine perspektivische Ansicht in teilweiseschnittbildlicher Darstellung einer Kammdüse;
- Fig. 6: eine perspektivische Ansicht einer weiteren erfindungsgemässen Luftfiltereinrichtung mit mehreren Filterbereichen;
- Fig. 7: die Draufsicht einer weiteren erfindungsgemässen Luftfiltereinrichtung mit in Kreisform angeordneten Filterbereichen;
- Fig. 7a: den unteren Teil einer Filtereinheit der Luftfiltereinheit gemäss Fig. 7;
- Fig. 8: die Draufsicht einer weiteren erfindungsgemässen Filtereinrichtung mit in Kreisform angeordneten Filterbereichen.

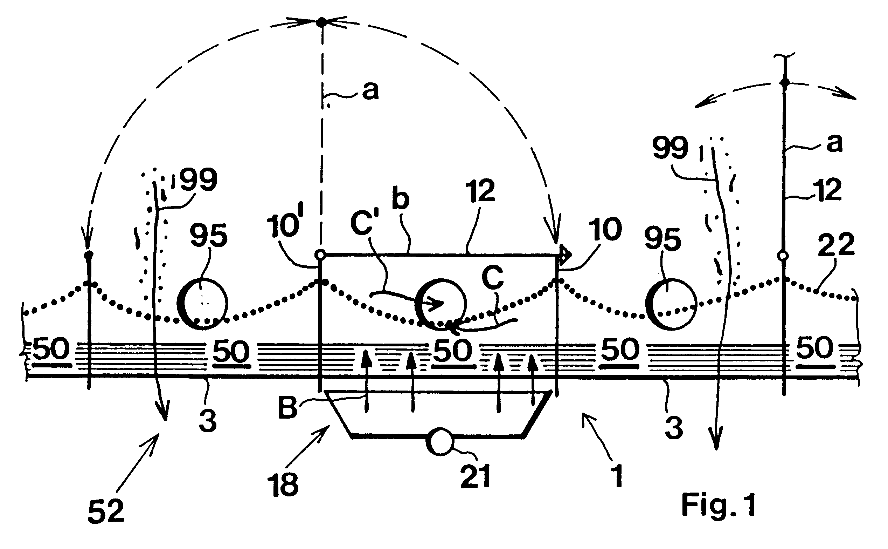

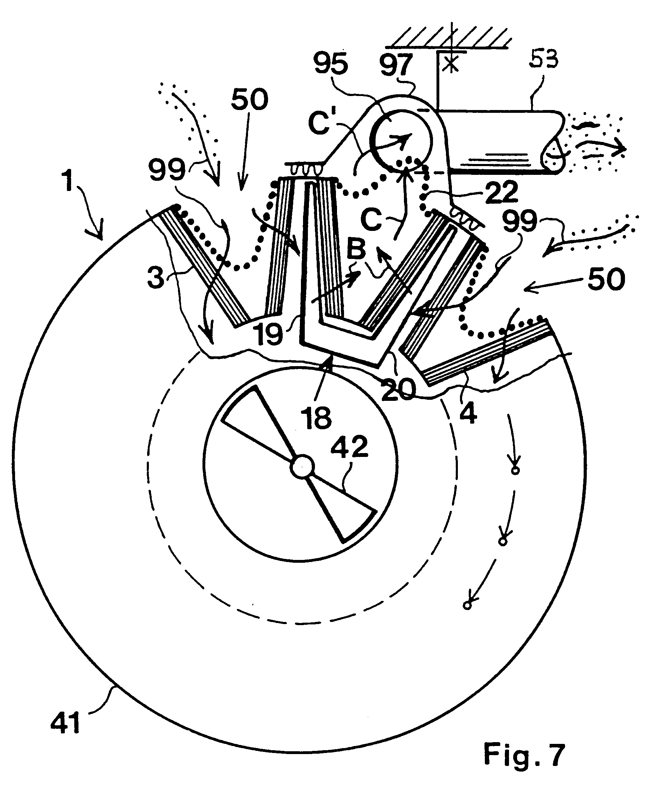

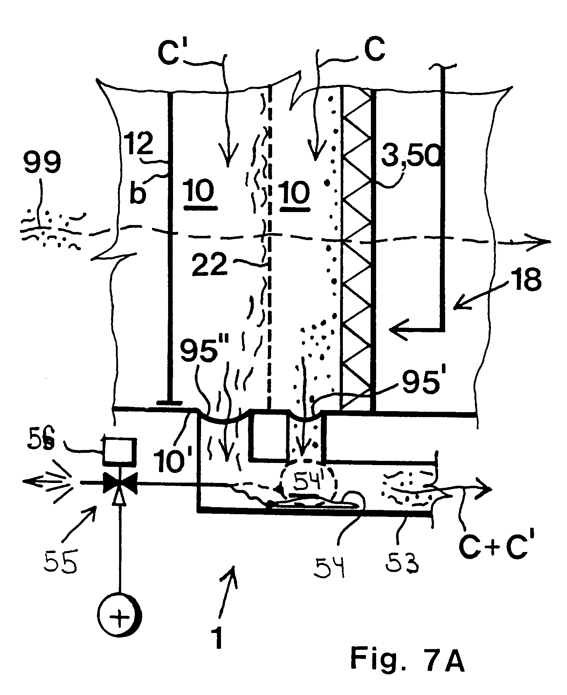

Die Luftfiltereinrichtung 1 in Fig. 1 weist eine Anzahl in einer gradlinigen Konfiguration angeordneten Faltenfilter 3 auf. Jedes dieser Faltenfilterelemente 3 stellt einen Filterbereich 50 dar. Die einzelnen Filterbereiche 50 sind durch Seitenwände 10, 10' voneinander getrennt. Die Seitenwände 10, 10' bilden zusammen mit einer aus einer Offenstellung a in eine Schliessstellung b schwenkbaren Klappe 12 ein Abgrenzungsorgan zur luftdichten Trennung des zu reinigenden Filterbereiches 50 von den übrigen Filterbereichen. Die Strömungsrichtung der Luft im Filterbetrieb ist durch einen Pfeil 99 dargestellt. Rohluftseitig ist jedem Filterbereich 50 ein im Nichtbetriebszustand ungespanntes Filtertuch 22 zum Auffangen grober Teilchen, wie z.B. Fasern, Fibrillen o.ä. oder Oeltröpfchen etc. angeordnet. Oberhalb der Zeichnungsebene ist eine (nicht dargestellte) Überdruckquelle angeordnet, welche im Reinigungszustand eine von oben nach unten gerichtete Transportströmung C erzeugt. Diese Transportströmung wird durch das Filtertuch 22 in zwei Teilströme C und C' unterteilt. Im unteren Teil der Luftfiltereinrichtung ist jedem Filterbereich 50 eine Entsorgungsöffnung 95 zur Entsorgung des von den Faltenfiltern 3 und dem Filtertuch 22 abgelösten und von der Transportströmung weggeförderten Filterrückstandes zugeordnet. Gewünschtenfalls kann jeder der beiden Transportströmungen eine Entsorgungsöffnung 95', 95'' (Fig. 7a) zugeordnet werden. Reinluftseitig ist dem mittleren Filterbereich 50 eine Kammdüse 18 mit einer Luftleitung 21 zugeordnet. Die Kammdüse 18 ist von oben nach unten bzw. von unten nach oben entlang des Filterbereiches 50 verfahrbar. In Fig. 1 ist der linke und der rechte Filterbereich 50 im Betriebszustand, d.h. im Filterprozess und der mittlere Filterbereich im Reinigungszustand dargestellt. Bei letzterem befindet sich die Klappe 12 in Schliessstellung b. Im dabei rohluftseitig gebildeten, luftdicht geschlossenen Raum wird die Transportströmung C, C' erzeugt. Gleichzeitig wird reinluftseitig der Filterbereich aus der Kammdüse 18 mit Druckluft B beaufschlagt. Dabei beträgt der Druck ein Vielfaches des Filtrierdruckes. Nach Beendigung der Reinigung schwenkt die Klappe 12 in Offenstellung a. Die Kammdüse 18 wird zum nächsten zu reinigenden Filterbereich 50 gefahren, dessen Klappe in Schliesstellung b schwenkt. Der Filterbereich 50 kann auch allein durch die Transportströmung C, C' gereinigt werden.

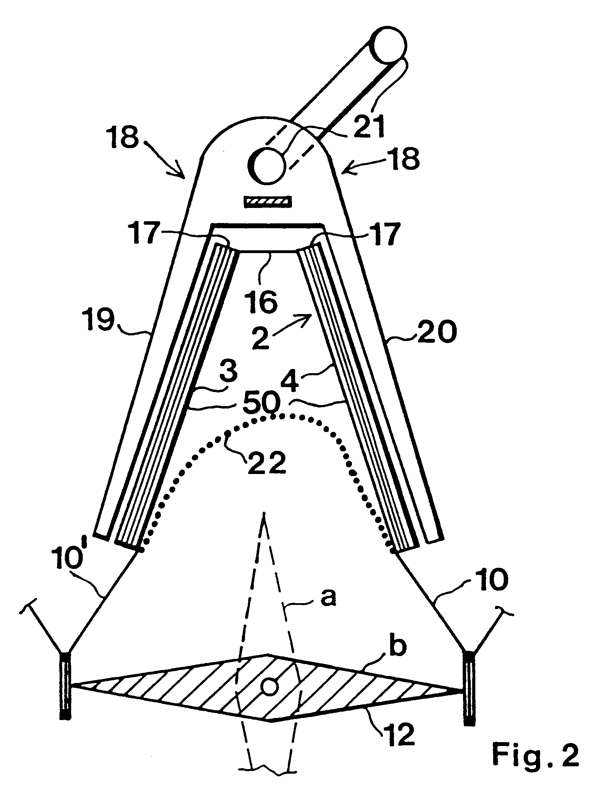

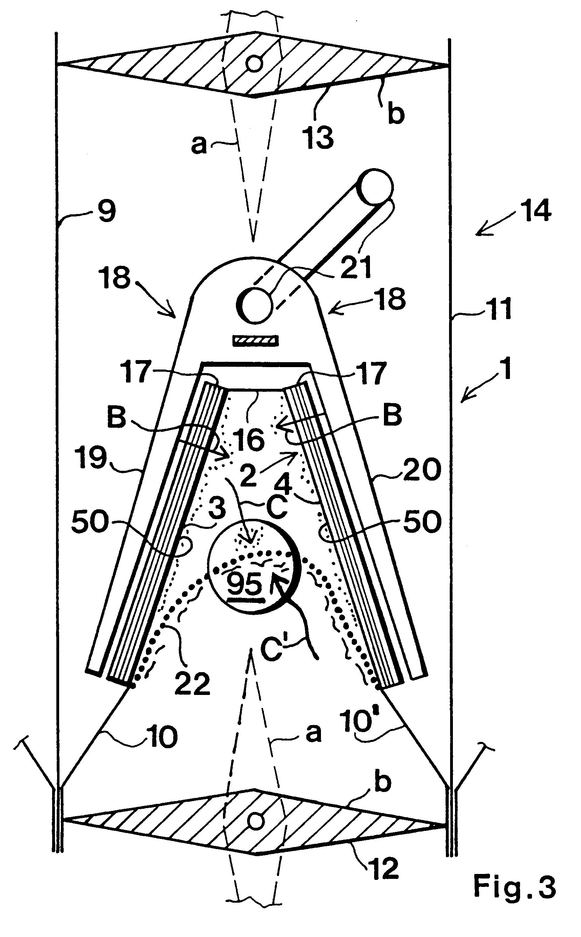

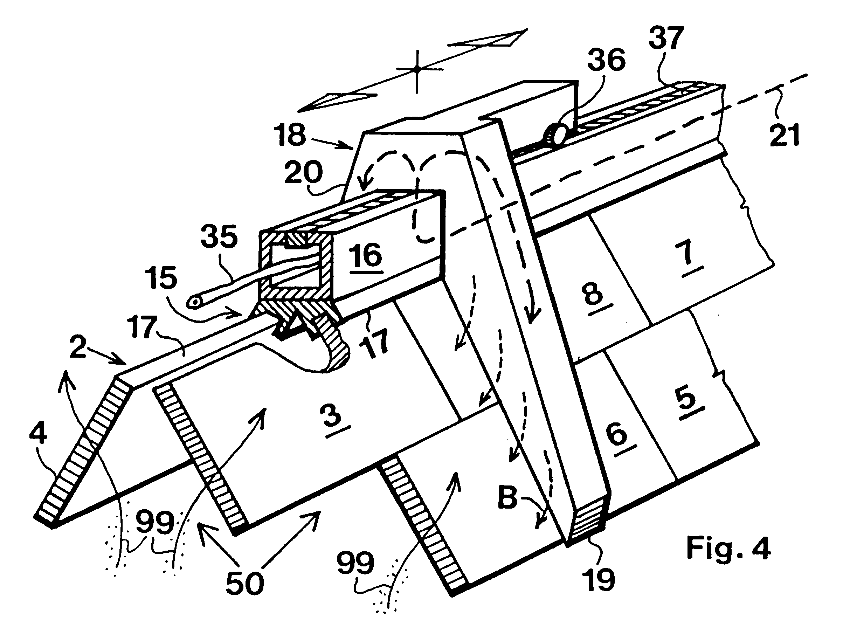

In den Fig. 1 bis 6 wird ein Filterbereich 50 von einem in V-Form angeordneten Faltenfilterpaar 2 gebildet. Jeder der beiden Faltenfilter 3, 4 des Faltenfilterpaars 2 besteht aus mehreren Filterelementen 5, 6, 7, 8 (Fig. 4). Im Anschluss an die rohluftseitigen Enden der Faltenfilter 3, 4 sind Seitenwände 10, 10' (Fig. 2, 3) angeordnet, die zusammen mit der aus einer Offenstellung a in eine Schliessstellung b schwenkbaren Klappe 12 ein Abgrenzungsorgan zur luftdichten Trennung des zu reinigenden Filterbereiches bildet. Beidseitig des Faltenfilterpaars 2 ist je eine Längswand 9, 11 (Fig. 3) angeordnet. Reinluftseitig ist zwischen den Wänden 9, 11 eine aus einer Offenstellung a in eine Schliessstellung b schwenkbare zweite Klappe 13 angeordnet. Die Längswände 9, 11 bilden zusammen mit den Klappen 12, 13 eine geschlossene Zelle 14, von der das Faltenfilterpaar 2 umschlossen ist. Das spitze Ende 15 der V-Form des Faltenfilterpaares 2 wird von einer Hohlschiene 16 gebildet, an deren zuluftseitigen Aussenseite die Längskanten 17 der Faltenfilter 3, 4 gelagert sind. Auf der reinluftseitigen Seite der Hohlschiene 16 ist eine Kammdüse 18, die durch Zusammenwirken von Zahnrad 36 und Zahnstange 37 entlang der Hohlschiene 16 verfahrbar ist, angeordnet. Die Energie für den Fahrbetrieb kann ein Elektromotor oder eine Abluftturbine liefern. Die Kammdüse 18 besitzt zwei in V-Form angeordnete Arme 19, 20, die in geringem Abstand an die Reinluftseite des Faltenfilterpaares 2 anschliessen. In der Hohlschiene 16 ist eine Luftleitung 21 angeordnet, die mit einer Druckluftquelle in Verbindung steht. Zwischen den beiden Filtern 3, 4 des Faltenfilterpaares 2 ist ein im Nichtbetriebszustand ungespanntes und im Betriebszustand gespanntes Filtertuch 22 zum Auffangen von gröberen Verunreinigungen vorgesehen.

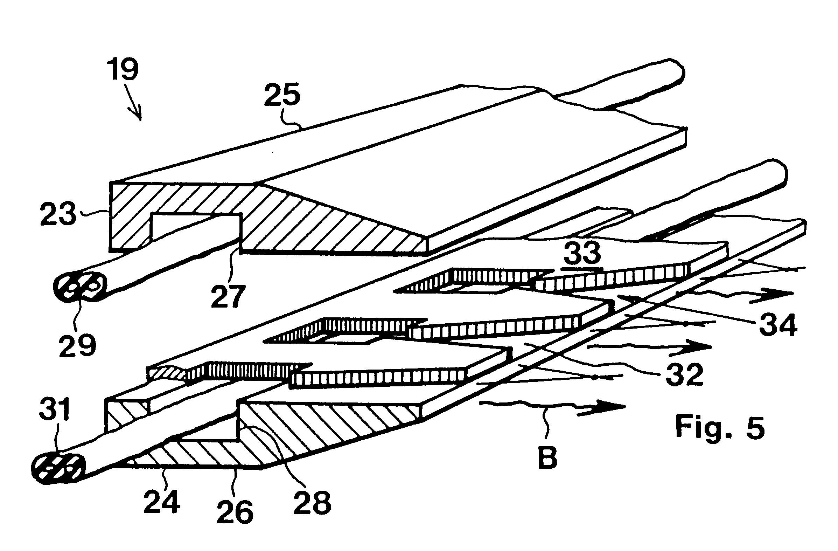

Die Arme 19, 20 der Kammdüse 18 (Fig. 5) werden von zwei sich auf die Faltenfilter 3, 4 zu verjüngenden Schienen 23, 24, in deren nicht verjüngtem Teil 25, 26 Ausnehmungen 27, 28 zur Luftführung und zur Aufnahme von Heizleitungen 29, 31 vorgesehen sind, gebildet. In diesen Ausnehmungen 27, 28 können gewünschtenfalls auch Dampfleitungen vorgesehen sein. Zwischen den Schienen 23, 24 ist ein mit Ausnehmungen 32 versehenes Band 33 von Dichtungsmaterial angeordnet. Je eine Ausnehmung 32 und die Schienen 23, 24 begrenzen eine Lavaldüse 34. Mehrere Lavaldüsen sind derart in einer Linie nebeneinander angeordnet, dass ihre Strahlen im wesentlichen lückenlos den benachbarten Faltenfilter anblasen. Die Kammdüse 18 erstreckt sich jeweils über die ganze Breite der beiden Faltenfilter 3, 4. Vorzugsweise sind die Lavaldüsen 34 derart angeordnet, dass die Linie der Düsenstrahlen B, d.h. die von ihnen gebildete Ebene mit den Falten der Faltenfilter 3, 4 einen spitzen Winkel bilden.

Innerhalb der Hohlschiene 16 ist ausser der Luftleitung 21 eine Heizeinrichtung 35 angeordnet. Durch die Heizung wird vermieden, dass die ausströmende Luft auf eine zu tiefe Temperatur abgekühlt wird, insbesondere soll eine Abkühlung unter den Taupunkt vermieden werden.

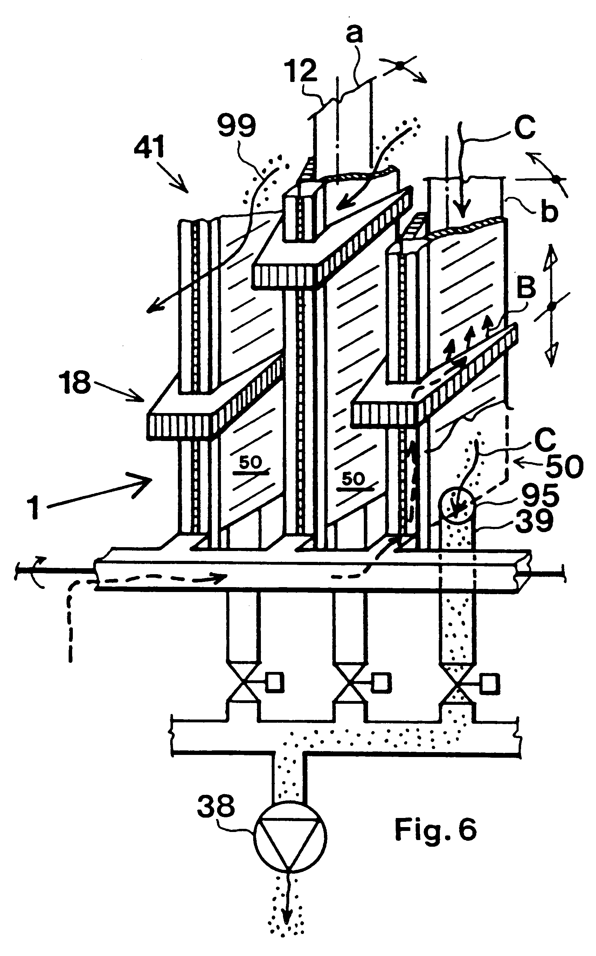

Wie aus Fig. 6 ersichtlich ist, kann zur Erzeugung der Transportströmung C, C' eine Drucksenke 38 vorgesehen sein, die über ein Auffanggefäss 39 mit der Entsorgungsöffnung 95 in Verbindung steht.

Die Luftfiltereinrichtung 41 in Fig. 7 weist eine kreisförmige Anordnung V-förmiger Filterbereiche 50 mit einem Ventilator 42 in der Mitte auf. Diese kreisförmige Anordnung kann als Trommel ausgebildet sein, die um ihre Achse drehbar gelagert ist. Düsenkamm 18 und Abgrenzungsorgan 97 sind, wie durch Maueranker in der Figur angedeutet wird, ortsfest.

Im unteren Teil der Filterbereiche 50 von Fig. 7 (dargestellt in Fig. 7a) ist für jede der beiden Transportströmungen C, C' eine Entsorgungsöffnung 95', 95'' vorgesehen. Im an die Entsorgungsöffnungen 95', 95'' anschliessenden Entsorgungskanal 53 ist ein aufblasbares Schliessorgan 54, dessen Luftinhalt mittels einer Steuereinrichtung 56 über einen Dreiweghahn gesteuert wird, angeordnet. Das Schlussorgan 54 sperrt in aufgeblasenem Zustand 54' den Entsorgungskanal 53 luftdicht ab. Weiterhin ist in Fig. 7a anstelle des Filtertuches 22 ein Sieb 22' angeordnet.

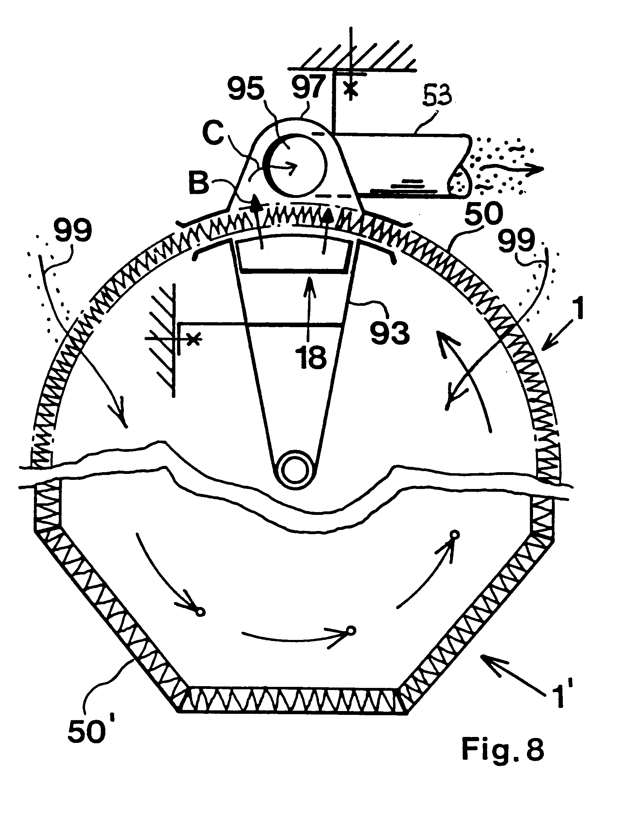

In Fig. 8 sind zwei Varianten einer Luftfiltereinrichtung 1, 1' mit kreissegmentförmigen bzw. geraden Filterbereichen 50, 50' dargestellt. Im ersten Fall ist die Filtereinrichtung zylindrisch, im zweiten mehreckig. Ausser dem rohluftseitigen Abgrenzungsorgan ist hier auch reinluftseitig ein Abgrenzungsorgan 93 vorgesehen. Auch hier ist die Luftfiltereinrichtung 1, 1' drehbar. Die Kammdüse 18 und die Abgrenzungsorgane 93, 97 sind ortsfest angeordnet.

## Patentansprüche

1. Faltenfilter aufweisende Luftfiltereinrichtung (1, 1') mit mehreren Filterbereichen (50), dadurch gekennzeichnet, dass sie mindestens eine Reinigungseinrichtung für einen Filterbereich (50) rohluftseitig mit einem Abgrenzungsorgan (10, 10', 12, 97) zur luftdichten Trennung des zu reinigenden Filterbereiches (50) von den übrigen Filterbereichen, einem Mittel (38) zur Erzeugung einer zu den Faltenfiltern im wesentlichen parallelen und zur Luftströmung (99) im Filterbetrieb quergerichteten Transportströmung (C) zwischen Filterbereich und Abgrenzungsorgan sowie einem Entsorgungsauslass (95) für durch die Transportströmung bewegtes Material aufweist.

2. Luftfiltereinrichtung nach Anspruch 1, dadurch gekennzeichnet, dass sie reinluftseitig eine entlang des zu reinigenden Filterbereiches verfahrbare Düse (18) aufweist.

3. Luftfiltereinrichtung nach Anspruch 2, dadurch gekennzeichnet, dass die Düse eine Kammdüse (18) ist, welche mehrere in einer Ebene angeordnete auf den Faltenfilter gerichtete Düsen (32) besitzt.

4. Luftfiltereinrichtung nach Anspruch 2 oder 3, dadurch gekennzeichnet, dass die einzelnen Düsen (18) Lavaldüsen (34) sind.

5. Luftfiltereinrichtung nach Anspruch 3 oder 4, dadurch gekennzeichnet, dass die Kammdüse (18) eine Heizeinrichtung (29, 31) besitzt.

6. Luftfiltereinrichtung nach einem der Ansprüche 2 bis 5, dadurch gekennzeichnet, dass die Ebene der Düsenstrahlen der Düse(n) (18) mit den Falten des zu reinigenden Faltenfilters (3, 4) einen spitzen Winkel bildet.

7. Luftfiltereinrichtung nach einem der Ansprüche 2 bis 6, dadurch gekennzeichnet, dass die Düse (18) zusätzlich zu den Luftleitungen (27, 28) Dampfleitungen aufweist.

8. Luftfiltereinrichtung nach einem der Ansprüche 3 bis 7, dadurch gekennzeichnet, dass die Düsen der Kammdüse (18) von Ausnehmungen (32) in einem Dichtungsmaterialband (33) gebildet sind.

9. Luftfiltereinrichtung nach einem der vorangehenden Ansprüche, dadurch gekennzeichnet, dass rohluftseitig dem Filterbereich (50) ein Abscheidungsorgan (22) für gröbere Verunreinigungen vorgeordnet ist.

10. Luftfiltereinrichtung nach Anspruch 9, dadurch gekennzeichnet, dass beidseitig des Abscheidungsorgans (22) je ein Auslass (95', 95'') für die Transportströmung (C, C') vorgesehen ist.

11. Luftfiltereinrichtung nach einem der vorangehenden Ansprüche, dadurch gekennzeichnet, dass im der Entsorgungsöffnung (95, 95', 95'') zugeordneten Entsorgungskanal (53) ein aufblasbares Schliessorgan (54, 54') angeordnet ist.

12. Luftfiltereinrichtung nach einem der vorangehenden Ansprüche, dadurch gekennzeichnet, dass sie eine elektrostatische Abscheidehilfe aufweist.

13. Luftfiltereinrichtung nach einem der vorangehenden Ansprüche, dadurch gekennzeichnet, dass der einzelne Filterbereich (50) von einem in V-Form angeordneten Faltenfilterpaar (3, 4) gebildet ist, an dessen Reinluftseite eine in Längsrichtung verfahrbare, über die Filterbreite Luftdüsen (34) aufweisende V-förmige Kammdüse (18) angeordnet ist, wobei dem Filterbereich (50) rohluftseitig ein Abgrenzungsorgan mit einem aus einer Offenstellung in eine Schliessstellung bewegbaren Absperrorgan (12) zugeordnet ist.

14. Luftfiltereinrichtung nach einem der vorangehenden Ansprüche, dadurch gekennzeichnet, dass die Filterbereiche (50) konzentrisch, vorzugsweise kreisförmig, angeordnet sind.

15. Luftfiltereinrichtung nach einem der vorangehenden Ansprüche, dadurch gekennzeichnet, dass die Reinigungseinrichtung entlang der Luftfiltereinrichtung (1) verfahrbar angeordnet ist.

16. Luftfiltereinrichtung nach einem der vorangehenden Ansprüche, dadurch gekennzeichnet, dass die Filterbereiche (50) entlang der Reinigungseinrichtung verfahrbar angeordnet sind.

17. Verfahren zum Betrieb der Luftfiltereinheit nach einem der vorangehenden Ansprüche, dadurch gekennzeichnet, dass, währenddem in mindestens einem Bereich (50) Luft filtriert wird, mindestens ein weiterer Bereich gereinigt wird.

18. Verfahren nach Anspruch 17, dadurch gekennzeichnet, dass die Reinigung mittels rohluftseitiger Transportströmung (C, C') erfolgt.

19. Verfahren nach Anspruch 17 oder 18, dadurch gekennzeichnet, dass die Reinigung mittels rohluftseitiger Transportströmung (C, C') und mittels reinluftseitigem Anblasen durch die Düse, vorzugsweise Kammdüse, (18) erfolgt, wobei der Anblasdruck ein Vielfaches des Filtrierdruckes beträgt.

20. Verfahren nach einem der Ansprüche 17 bis 19, dadurch gekennzeichnet, dass die Filterelemente (3) zur Reinigung mit einem pulsierenden Luftstrom beaufschlagt werden.

## Claims

1. Air-filter device (1, 1') having folded filters with a plurality of filter regions (50), characterized in that it has at least one cleaning device for a filter region (50) on a crude-air side, with a delimiting member (10, 10', 12, 97) for the airtight separation of the filter region (50) to be cleaned from the remaining filter regions, a means (38) for generating a transport flow (C) between the filter region and the delimiting member, said transport flow (C) being essentially parallel to the folded filters and being directed transversely to the air flow (99) in the filter mode, and a disposal outlet (95) for material moved by the transport flow.

2. Air-filter device according to Claim 1, characterized in that it has on the clean-air side a nozzle (18) movable along the filter region to be cleaned.

3. Air-filter device according to Claim 2, characterized in that the nozzle is a comb nozzle (18) which possesses a plurality of nozzles (32) arranged in one plane and directed to the folded filter.

4. Air-filter device according to Claim 2 or 3, characterized in that the individual nozzles (18) are Laval nozzles (34).

5. Air-filter device according to Claim 3 or 4, characterized in that the comb nozzle (18) possesses a heating device (29, 31).

6. Air-filter device according to one of Claims 2 to 5, characterized in that the plane of the nozzle jets of the nozzle or nozzles (18) forms an acute angle with the folds of the folded filter (3, 4) to be cleaned.

7. Air-filter device according to one of Claims 2 to 6, characterized in that the nozzle (18) has steam lines in addition to the air lines (27, 28).

8. Air-filter device according to one of Claims 3 to 7, characterized in that the nozzles of the comb nozzle (18) are formed by recesses (32) in a strip of sealing material (33).

9. Air-filter device according to one of the preceding claims, characterized in that the filter region (50) is preceded on the crude-air side by a separation member (22) for coarser impurities.

10. Air-filter device according to Claim 9, characterized in that an outlet (95', 95'') for the transport flow (C, C') is provided on each of the two sides of the separation member (22).

11. Air-filter device according to one of the preceding claims, characterized in that an inflatable closing member (54, 54') is arranged in the disposal channel (53) assigned to the disposal orifice (95, 95', 95'').

12. Air-filter device according to one of the preceding claims, characterized in that it has an electrostatic separation aid.

13. Air-filter device according to one of the preceding claims, characterized in that the individual filter region (50) is formed by a pair of folded filters (3, 4) which is arranged in a V-shaped manner and on the clean-air side of which is arranged a V-shaped comb nozzle (18) movable in the longitudinal direction and having air nozzles (34) over the filter width, the filter region (50) being assigned, on the crude-air side, a delimiting member having a shut-off member (12) movable out of an open position into a closed position.

14. Air-filter device according to one of the preceding claims, characterized in that the filter regions (50) are arranged concentrically, preferably circularly.

15. Air-filter device according to one of the preceding claims, characterized in that the cleaning device is arranged movably along the air-filter device (1).

16. Air-filter device according to one of the preceding claims, characterized in that the filter regions (50) are arranged movably along the cleaning device.

17. Process for operating the air filter unit according to one of the preceding claims, characterized in that, while air is being filtered in at least one region (50), a further region is being cleaned.

18. Process according to Claim 17, characterized in that the cleaning takes place by means of a transport flow (C, C') on the crude-air side.

19. Process according to Claim 17 or 18, characterized in that the cleaning takes place by means of a transport flow (C, C') on the crude-air side and by means of blowing by the nozzle on the clean-air side, preferably comb nozzle, (18), the blowing pressure amounting to a multiple of the filtering pressure.

20. Process according to one of Claims 17 to 19, characterized in that the filter elements (3) are loaded for cleaning purposes with a pulsating air stream.

## Revendications

1. Installation de filtre à air (1, 1') présentant un filtre plié avec plusieurs zones de filtration (50), caractérisée en ce qu'elle comporte au moins une installation de nettoyage d'une zone de filtration (50) sur le côté air brut, avec un élément de séparation (10, 10', 12, 97) pour séparer d'une manière étanche à l'air la zone de filtration (50) à nettoyer des autres zones de filtration, un moyen (38) pour produire un courant de transport (C) entre la zone de filtration et l'élément de séparation sensiblement parallèle aux filtres pliés et perpendiculaire au flux d'air (99) en fonctionnement, ainsi qu'une conduite d'évacuation (95) pour le matériau se déplaçant grâce au courant de transport.

2. Installation de filtre d'air selon la revendication 1, caractérisée en ce qu'elle comporte sur le côté air filtré une buse (18) déplaçable le long de la zone de filtration à nettoyer.

3. Installation de filtre d'air selon la revendication 2, caractérisée en ce que la buse est une buse en forme de peigne (18) qui comporte une pluralité d'orifices (32) agencés dans un plan et dirigés vers le filtre plié.

4. Installation de filtre d'air selon la revendication 2 ou 3, caractérisée en ce que les buses individuelles (18) sont des buses Laval (34).

5. Installation de filtre d'air selon la revendication 3 ou 4, caractérisée en ce que la buse en forme de peigne (18) comporte une installation de chauffage (29, 31).

6. Installation de filtre d'air selon l'une des revendications 2 à 5, caractérisée en ce que le plan du jet de la buse ou des buses (18) forme un angle aigu avec le filtre plié à nettoyer (3, 4).

7. Installation de filtre d'air selon l'une des revendications 2 à 6, caractérisée en ce que les buses (18) comportent des conduites de vapeur en plus des conduites d'air (27, 28).

8. Installation de filtre d'air selon l'une des revendications 3 à 7, caractérisée en ce que les orifices (32) de la buse en forme de peigne (18) sont aménagés en creux dans une bande de matériau d'étanchement (33).

9. Installation de filtre d'air selon l'une des revendications précédentes, caractérisée en ce que le côté air brut de la zone de filtration (50) comporte un élément de séparation (22) pour les particules grossières.

10. Installation de filtre d'air selon la revendication 9, caractérisée en ce que les deux côtés de l'élément de séparation (22), comportent chacune une sortie d'évacuation (95', 95'') pour le courant de transport (C, C').

11. Installation de filtre d'air selon l'une des revendications précédentes, caractérisée en ce que dans la sortie d'évacuation (95, 95', 95''), du canal d'évacuation (53), il est prévu un organe gonflable de fermeture (54, 54').

12. Installation de filtre d'air selon l'une quelconque des revendications précédentes, caractérisée en ce qu'elle comporte un moyen de séparation électrostatique.

13. Installation de filtre d'air selon l'une des revendications précédentes, caractérisée en ce que les zones de filtration individuelles (50) sont réalisées avec une paire de filtres en forme de V (3, 4), en ce qu'une buse en forme de peigne ayant la forme d'un V est montée sur ces filtres du côté air filtré, laquelle buse (18) comporte des ouvertures (34) suivant sa longueur et est mobile dans la direction longitudinale, et en ce que la zone de filtration (50) est pourvue sur le côté air brut d'un élément de séparation comportant un organe d'arrêt (12) mobile entre une position de fermeture et d'ouverture.

14. Installation de filtre d'air selon l'une quelconque des revendications précédentes, caractérisée en ce que les zones de filtration (50) sont agencées d'une manière concentrique, de préférence circulaire.

15. Installation de filtre d'air selon l'une quelconque des revendications précédentes, caractérisée en ce que l'installation de nettoyage est disposée pour être mobile le long de l'installation de filtration d'air (1).

16. Installation de filtration d'air selon l'une quelconque des revendications précédentes, caractérisée en ce que la zone de filtration (50) est agencée pour être mobile le long de l'installation de nettoyage.

17. Procédé de mise en oeuvre de l'installation de filtre à air selon l'une quelconque des revendications précédentes, caractérisée en ce qu'au moins une zone (50) filtre l'air pendant qu'au moins une autre zone est nettoyée.

18. Procédé selon la revendication 17, caractérisé en ce que le nettoyage est fait par le flux de transport (C, C') depuis le côté air brut.

19. Procédé selon la revendication 17 ou 18, caractérisé en ce que le nettoyage se fait grâce au courant de transport (C, C') depuis le côté air brut et par une injection d'air du côté air filtré par la buse, de préférence la buse en forme de peigne (18), la pression d'injection étant supérieure de plusieurs fois à la pression de filtration.

20. Procédé selon l'une des revendications 17 à 19, caractérisé en ce que le nettoyage des éléments filtrants (3) se fait à l'aide d'un courant d'air pulsé.
